# EUROPEAN PATENT SPECIFICATION

(11) **EP 3 575 915 B1**
(45) Date of publication and mention of the grant of the patent: **21.07.2021**
(21) Application number: 18174574.6
(22) Date of filing: 28.05.2018
(51) Int. Cl.: G05D 7/01, F16K 1/44, F16K 1/52

(54) **FLOW REGULATION VALVE AND METHOD FOR CALIBRATING THE SAME**
DURCHFLUSSREGELVENTIL UND VERFAHREN ZUR KALIBRIERUNG DAVON
SOUPAPE DE RÉGULATION DE DÉBIT ET SON PROCÉDÉ D'ÉTALONNAGE

(43) Date of publication of application: 04.12.2019
(73) Proprietor: Honeywell Technologies Sarl, 1180 Rolle (CH)
(72) Inventor: Brabec, Jan, 679 61 Letovice (CZ)
(74) Representative: Sturm, Christoph

(56) References cited:
- EP-A1- 2 623 823
- EP-A1- 3 223 105
- US-A1- 2008 035 221
- US-A1- 2014 326 336
- US-A1- 2016 246 306

## Description

The present patent invention relates to a flow regulation valve for liquid conduction heating and cooling installations and to a calibration method for such a flow regulation valve.

WO 2015/010685 A2 discloses a flow regulation valve. The flow regulation valve known from WO 2015/010685 A2 comprises a valve housing providing a valve inlet, a valve outlet and a connection port which is arranged between the valve inlet and the valve outlet, and further comprises a valve insert accommodated within the connection port of the valve housing. The valve insert has a valve insert housing. The valve insert further has a first valve body carried by a valve stem, wherein said first valve body provides a shut-off function when the valve is closed and a flow pre-setting function when the valve is opened. The valve insert further has a second valve body, wherein said second valve body provides a pressure-independent flow-regulation function when the valve is opened to keep the flow constant independent from the pressure being present upstream and/or downstream of the first valve body. The valve insert further has a diaphragm connected to the second valve body, wherein the pressure being present upstream of the first valve body is guided through a channel of the stem to a first side of the diaphragm, and wherein the pressure being present downstream of the first valve body is guided through at least one opening in the second valve body to a second side of the diaphragm. The valve insert of the flow regulation valve known from WO 2015/010685 A2 further provides valve seats for the first valve body and for the second valve body.

EP 3 223 105 A1 discloses another flow regulation valve according to the prior art. EP 3 223 105 A1 discloses a flow regulation valve according to the preamble of claim 1.

Other prior art is disclosed by US 2016/246306 A1, by US 2008/035221 A1, by US 2014/326336 A1 and by EP 2 623 823 A1.

Against this background, a novel flow regulation valve for liquid conduction heating and cooling installations according to claim 1 is provided.

According to the present invention, the flow regulation valve comprises a separate spring support for the flow-regulation spring. The spring support is mounted to the valve insert housing. A first end of the flow-regulation spring is supported against the second valve body. An opposite second end of the flow-regulation spring is supported against the spring support. The separate spring support in beneficial to improve the flow through the flow regulation valve.

According to a preferred embodiment of the invention, a first section of the spring support is mounted to an end section of the valve insert housing. A second section of the spring support protrudes axially and radially inwardly beyond the end section of the valve insert housing, wherein the second end of the flow-regulation spring is supported against the second section of the spring support. This design is simple, reliable and improves the flow through the flow regulation valve.

Preferably, the pressure being present upstream of the first valve body acts indirectly through the diaphragm on the second valve body. The pressure being present downstream of the first valve body acts together with the force provided by the flow-regulation spring directly on the second valve body. This design is simple, reliable and further improves the flow through the flow regulation valve.

According to a preferred embodiment of the invention, the valve insert has a ring element, wherein a first portion of the diaphragm is connected to the second valve body and a second portion of the diaphragm is connected the ring element.

The ring element comprises a circumferentially closed outer wall with a groove, wherein the ring element is mounted to the valve insert housing by a clear clip penetrating partially into the groove of the ring element and partially into a groove of the valve insert housing surrounding the ring element. This design is simple, reliable and easy to manufacture.

The method for calibrating a flow regulation valve for liquid conduction heating and cooling installations is defined in claim 10.

Preferred developments of the invention are provided by the dependent claims and the description which follows.

An exemplary embodiment is explained in more detail on the basis of the drawing, in which:
- Figure 1: shows a cross section through a flow regulation valve in a first status of the same;
- Figure 2: shows a cross section through the flow regulation valve in a second status of the same;
- Figure 3: shows a perspective view of a first detail of the flow regulation valve, namely of a second valve body of a valve insert;
- Figure 4: shows a perspective view of a second detail of the flow regulation valve, namely of a ring element of the valve insert;

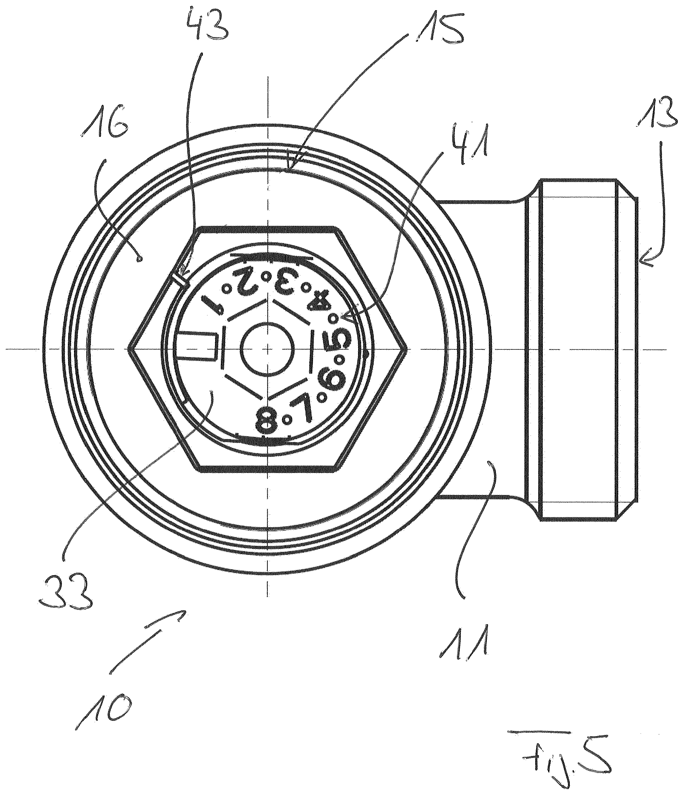

- Figure 5: shows a top view of the flow regulation valve.

The present invention relates to a flow regulation valve 10 for liquid conduction heating and cooling installations.

The flow regulation valve 10 comprises a valve housing 11 providing a valve inlet 12, a valve outlet 13 and a connection port 14 which is arranged between the valve inlet 12 and the valve outlet 13.

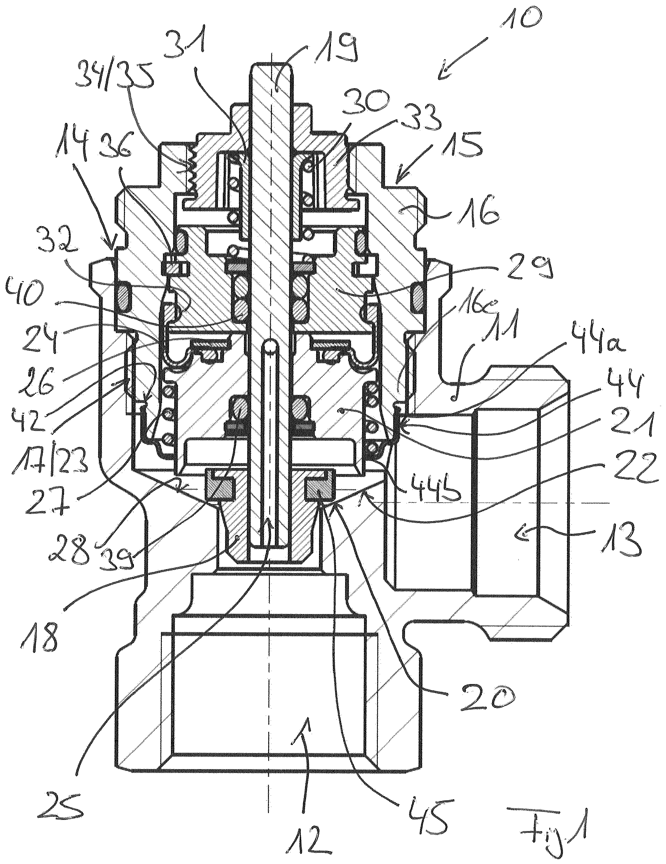

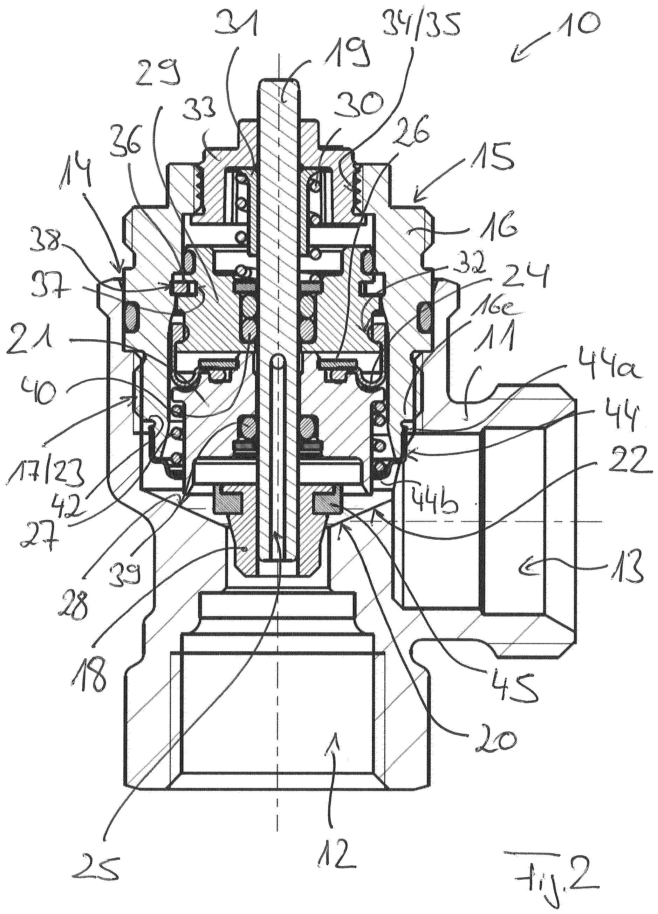

The flow regulation valve 10 further comprises a valve insert 15 accommodated within the connection port 14 of the valve housing 11. As can be seen in Figures 1 and 2, the valve insert 15 has a valve insert housing 16 with an outer thread 17 acting together with an inner thread 23 of the connection port 14 when the valve insert 15 is accommodated within the connection port 14.

The valve insert 15 further has a first valve body 18 carried by a valve stem 19. Said first valve body 18 provides a shut-off function when the valve 10 is closed and a flow pre-setting function when the valve is 10 opened.

The first valve body 18, namely a sealing element 45 of the same, acts together with a first valve seat 20 provided by the valve housing 11. Said first valve seat 20 is provided by the valve housing 11 and not by the valve insert 15. When the valve 10 is closed, the said first valve body 18, namely the sealing element 45 of the same, is pressed against the first valve seat 20 thereby providing the shut-off function. When the valve 10 is opened, the said first valve body 18, namely the sealing element 45 of the same, is lifted up from the first valve seat 20 thereby providing the flow pre-setting function. When the first valve body 18 is moved to a maximum distance relative to the first valve seat 20, a maximum flow is pre-set.

For reducing the pre-set flow, the first valve body 18 is moved or pushed closer towards the first valve seat 20. The more or the close the first valve body 18 is moved or pushed closer towards the first valve seat 20, the lower the pre-set flow is.

The first valve body 18 is a plunger-type valve body and can made from a metal like brass. The sealing element 45 can be made from a rubber or a rubber-like material like an EPDM material.

The valve insert 15 further has a second valve body 21, wherein said second valve body 21 provides a pressure-independent flow-regulation function when the valve 10 is opened to keep the fluid flow constant independent from the pressure being present upstream of the first valve body 18 and being present downstream of the first valve body 18.

The second valve body 21 acts together with a second valve seat 22 provided by the valve housing 10. Also said second valve seat 22 is provided by the valve housing 11 and not by the valve insert 15.

When the valve 10 is opened, said second valve body 21 moves up and down depending from the pressure difference between the pressure being present upstream of the first valve body 18 and the pressure being present downstream of the first valve body 18 for providing the pressure-independent flow-regulation function. A lower section of the valve insert housing 16 is positioned concentrically around the second valve body 21 and guides the movement of the second valve body 21. The second valve body 21 guides the movement of valve stem 19 carrying the first valve body 18.

The valve insert 15 further has a diaphragm 24 connected to the second valve body 21. This connection of the diaphragm 24 connected to the second valve body 21 is preferably provided by a washer 26.

The valve insert 15 further has a flow-regulation spring 27 acting on the second valve body 21. A force provided by said flow-regulation spring 27 and a force depending from the pressure being present downstream of the first valve body 18 tend to move the second valve body 21 in a first direction.

A force depending from the pressure being present upstream of the first valve body 18 tends to move the second valve body 21 in a second, opposite direction.

The pressure being present upstream of the first valve body 18 within the valve inlet 12 is guided through a channel 25 extending through the stem 19 and the first valve body 18 to a first side of the diaphragm 24. The pressure being present upstream of the first valve body 18 within the valve inlet 12 acts indirectly through the diaphragm 24 on the second valve body 21.

The pressure being present downstream of the first valve body 18 acts together with the force provided by the flow-regulation spring 27 directly on the second valve body 21.

As mentioned above, a force provided by said flow-regulation spring 27 and a force depending from the pressure being present downstream of the first valve body 18 tend to move the second valve body 21 in a first direction, namely upwards, whereas a force depending from the pressure being present upstream of the first valve body 18 within the valve inlet 12 tends to move the second valve body 21 in a second, opposite direction, namely downwards.

The flow-regulation spring 27 is positioned concentrically around the second valve body 21.

As mentioned above, the first valve seat 20 for the first valve body 18 and the second valve seat 22 for the second valve body 21 are both provided by the valve housing 11.

The second valve seat 22 for the second valve body 21 is positioned proximate to the first valve seat 21 for the first valve body 18, preferably concentrically around the first valve seat 20. The valve housing 11 has a conically shaped inner surface contour 28 providing the second valve seat 22 and proximate to the second valve seat 22 the first valve seat 20.

A first end of the flow-regulation spring 27 is supported against the second valve body 21, and a second end of the flow-regulation spring 27 is supported against a separate spring support 44.

The separate spring support 44 is positioned concentrically around the second valve body 21. The separate spring support 44 is mounted to the valve insert housing 16.

A first section 44a of the spring support 44 is mounted to an end section 16e of the valve insert housing 16. The first section 44a of the spring support 44 is mounted to the end section 16e of the valve insert housing 16 by a snap fit connection. The first end section 44a of the spring support 44 is snapped into a groove 42 provided at an outer wall of the end section 16e of the valve insert housing 16.

A second section 44b of the spring support 44 protrudes axially and radially inwardly beyond the end section 16e of the valve insert housing 16, namely towards the second valve body 21. The second end of the flow-regulation spring 27 is supported against the second section 44b of the spring support 44.

The flow-regulation spring 27 is positioned in a gap defined by a radial distance between the valve insert housing 16 and the second valve body 21. In axial direction said gap is delimited by a protrusion of the second valve body 21 and by the second section 44b of the spring support 44.

The valve insert 15 of the flow regulation valve 10 further comprises a ring element 29, wherein a first portion of the diaphragm 14 is connected to the second valve body 21, whereas a second portion of the diaphragm 14 is connected the ring element 29.

An outer section of the diaphragm 14 is fixed in a corresponding recess 32 of the ring element 29. The ring element 29 as well as the second valve body 21 guides the valve stem 19.

The valve insert 15 further has an opening spring 30, wherein a first end of the opening spring 30 is supported against the ring element 29, and wherein a second end of the opening spring 30 is supported against the stem 19, namely against a rivet 31 carried by the stem 19. The main function of said opening spring 30 is to push the first valve body 18 into the opening direction of the same.

The valve insert 15 further has a handle element 33 received by the valve insert housing 16 in such a way that said handle element 33 comprises an outer thread 34 acting together within an inner thread 35 of the valve insert housing 16 so that the handle element 33 is rotatable relative to the valve insert housing 16. The handle element 33 guides a section of the stem 19. The handle element 33 is supported against rivet 31.

By rotating the handle element 33, the stem 19 and thereby the first valve body 18 ban be moved linear in the axial direction of the valve stem 19. The rotation of the handle element 33 causes - depending of the rotation direction - a compression or decompression of the opening spring 30.

The position of the ring element 29 within the valve insert housing 16 is fixed by a clear clip 36. The ring element 29 comprises a circumferentially closed outer wall with a groove 37. The valve insert housing 16 surrounding the ring element 29 comprises a groove 38.

The ring element 29 is mounted to the valve insert housing 16 by the clear clip 36 penetrating partially into the groove 37 of the ring element 29 and partially into the groove 38 of the valve insert housing 16.

The diaphragm 24 and the ring element 29 separate a flooded section from a dry section of the valve insert housing 16. The first valve body 18 and partially the stem 19 as well as the second valve body 21 and the flow-regulation spring 27 are positioned within the flooded section of the valve insert housing 16. The opening spring 30, the handle element 33 and partially the stem 19 are positioned with the dry section of the valve insert housing 16. As mentioned above, the diaphragm 24 and the ring element 33 separate a flooded section of the valve insert housing 16 from a dry section of the valve insert housing 16. Only a few other additional sealing elements are required within the valve insert 15, namely at least one sealing element 39 between the valve stem 19 and the second valve body 21 and at least one further sealing element 40 between the valve stem 19 and the ring element 29.

As discussed above, the valve 10 provided three basic functions:
First, the shut-off function. For shutting off the valve 10 the first valve body 18 is pressed against the first valve seat 20. A force is transferred through the stem 19 to first valve body 18 of the valve insert 15 that closes against the first valve seat 20 provided by the valve housing 11. This force can be applied by the handle element 33 or by an actuator (not shown) acting on the valve stem 19.

Second, the flow pre-setting function. The flow pre-setting is provided by rotating the handle element 33 thereby compressing or decompressing the opening spring 30. This causes a linear movement of the valve stem 19 and of the first valve body 18 relative to the first valve seat 20. After pre-setting is completed, the position of the first valve body 18 relative to the first valve seat 20 remains unchanged.

Third, the pressure-independent flow-regulation function. This pressure-independent flow-regulation function is provided by the diaphragm 24, by the second valve body 21 acting together with the second valve seat 22, and by flow regulation spring 27. A force provided by said flow-regulation spring 27 and a force depending from the pressure being present downstream of the first valve body 18 tend to move the second valve body 21 in a first direction. A force depending from the pressure being present upstream of the first valve body 18 tends to move the second valve body 21 in a second, opposite direction.

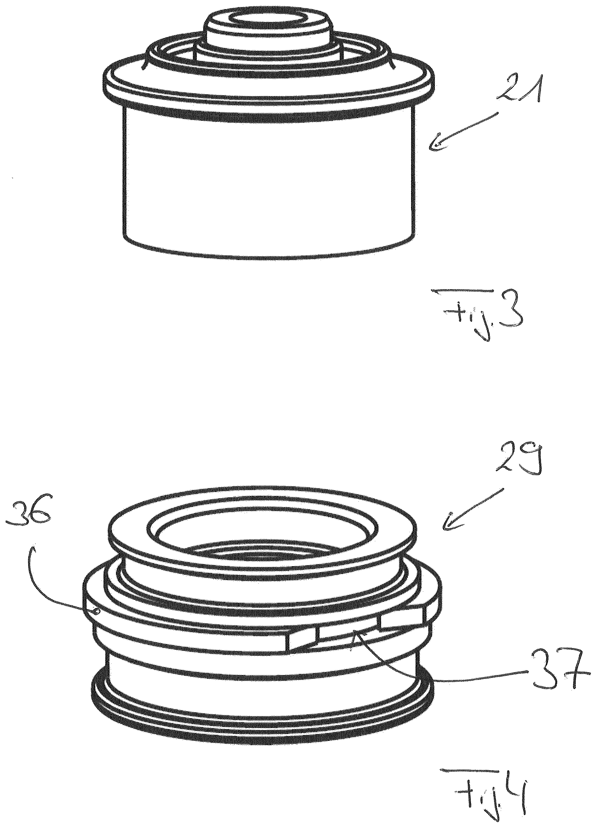

The handle element 33 carries the scale 41 (see Figure 4). The same allows flow pre-setting. By screwing or rotating the handle element 33 the same pushes the valve stem 19 up or down and consequently defines the flow pre-setting. The handle element 33 guides the valve stem 19.

The valve insert housing 16 provides an outer shell of the valve insert 16. The same provides a connection with valve body 11.

The present disclosure further provides a calibration method for such a flow regulation valve 10, namely to calibrate a specific, preferably minimal, distance of the first valve body 18 relative to the first valve seat 20 which to calibrate a specific, preferably minimal, pre-set flow rate through the flow regulation valve 10. The calibrating method comprises the following steps:
Providing a flow regulation valve 10 as described above.

Installing the flow regulation valve 10 in a liquid conduction heating and cooling installation or in a calibration installation. The valve inlet 12 becomes connected to an inlet pipe and the valve outlet 13 to an outlet duct of the respective installation.

Providing a flow through the flow regulation valve 10 under defined calibration conditions by opening the first valve body 18. The defined calibration conditions cover a defined pressure and a defined temperature.

Measuring the flow through the flow regulation valve 10.

Moving the first valve body 18 towards a closing position of the same thereby decreasing the flow through the flow regulation valve 10 until the measured flow through the flow regulation valve 10 reaches the specific flow rate. The first valve body 18 is moved towards the closing position of the same by turning the handle element 33 of the flow regulation valve 10.

Marking the valve insert 15 when the first valve body 18 is in a position in which the same provides the specific flow rate. A mark 43 is provided on the valve insert 15 opposite a scale mark of the scale 41 of handle 33 being indicative to the specific flow rate. The marking is provided by punching the valve insert 15.

### List of reference signs

- 10: flow regulation valve
- 11: valve housing
- 12: valve inlet
- 13: valve outlet
- 14: connection port
- 15: valve insert
- 16: valve insert housing
- 16e: end section
- 17: outer thread
- 18: first valve body
- 19: valve stem
- 20: first valve seat
- 21: second valve body
- 22: second valve seat
- 23: inner thread
- 24: diaphragm
- 25: channel
- 26: washer
- 27: flow-regulation spring
- 28: inner surface contour
- 29: ring element
- 30: opening spring
- 31: rivet
- 32: recess
- 33: handle element
- 34: outer thread
- 35: inner thread
- 36: clear clip
- 37: groove
- 38: groove
- 39: sealing element
- 40: sealing element
- 41: scale
- 42: groove
- 43: mark
- 44: spring support
- 44a: first section
- 44b: second section
- 45: sealing element

## Claims

1. Flow regulation valve (10) for liquid conduction heating and cooling installations, comprising
a valve housing (11) providing a valve inlet (12), a valve outlet (13) and a connection port (14) which is arranged between the valve inlet (12) and the valve outlet (13), wherein the connection port (14) has an inner thread (23);
a valve insert (15) accommodated within the connection port (14) of the valve housing (11), the valve insert (15) having
a valve insert housing (16) having an outer thread (17) acting together with the inner thread (23) of the connection port (14);
a first valve body (18) carried by a valve stem (19), wherein said first valve body (18) provides a shut-off function when the valve (10) is closed and a flow pre-setting function when the valve (10) is opened;
a second valve body (21), wherein said second valve body (21) provides a pressure-independent flow-regulation function when the valve (10) is opened to keep the flow constant independent from the pressure being present upstream of the first valve body (18) and/or downstream of the first valve body (18), wherein a section of the valve insert housing (16) is positioned concentrically around the second valve body (21) and guides the movement of the second valve body (21), and wherein the second valve body (21) guides the movement of valve stem (19) carrying the first valve body (18);
a diaphragm (24) connected to the second valve body (21) and a flow-regulation spring (27) acting on the second valve body (21),
wherein a force provided by said flow-regulation spring (27) and a force depending from the pressure being present downstream of the first valve body (18) tend to move the second valve body (21) in a first direction,
whereas a force depending from the pressure being present upstream of the first valve body (18) tends to move the second valve body (21) in a second, opposite direction;
a first valve seat (20) for the first valve body (18) and a second valve seat (22) for the second valve body (21) both provided by the valve housing (11);
**characterized by**
a separate spring support (44) for the flow-regulation spring (27),
wherein the spring support (44) is mounted to the valve insert housing (16),
wherein a first end of the flow-regulation spring (27) is supported against the second valve body (21),
wherein an opposite second end of the flow-regulation spring (27) is supported against the spring support (44).

2. Flow regulation valve as claimed in claim 1, **characterized in that** a first section (44a) of the spring support (44) is mounted to an end section (16e) of the valve insert housing (16).

3. Flow regulation valve as claimed in claim 2, **characterized in that** the first section (44a) of the spring support (44) is mounted to the end section (16e) of the valve insert housing (16) by a snap fit connection, namely in such a way that the first end section (44a) of the spring support (44) is snapped into a groove (42) provided at an outer wall of the valve insert housing (16).

4. Flow regulation valve as claimed in claim 2 or 3, **characterized in that** a second section (44b) of the spring support (44) protrudes axially and radially inwardly beyond the end section (16e) of the valve insert housing (16), wherein the second end of the flow-regulation spring (27) is supported against the second section (44b) of the spring support (44).

5. Flow regulation valve as claimed in one of claims 1-4, **characterized in that** the pressure being present upstream of the first valve body (18) acts through the diaphragm (24) on the second valve body (21).

6. Flow regulation valve as claimed in claim 5, **characterized in that** the pressure being present upstream of the first valve body (18) is guided through a channel (25) of the stem (19) to a first side of the diaphragm (24).

7. Flow regulation valve as claimed in one of claims 1-6, **characterized in that** the pressure being present downstream of the first valve body (18) acts together with the force provided by the flow-regulation spring (27) directly on the second valve body (21).

8. Flow regulation valve as claimed in one of claims 1-7, **characterized in that** the second valve seat (22) for the second valve body (21) is positioned concentrically around the first valve seat (20) for the first valve body (18), wherein the valve housing (11) has a conically shaped inner surface contour (28) providing the second valve seat (22) and proximate to the second valve seat (22) the first valve seat (21).

9. Flow regulation valve as claimed in one of claims 1-8, **characterized in that** the valve insert (15) has a ring element (29),
wherein a first portion of the diaphragm (24) is connected to the second valve body (21) and a second portion of the diaphragm (24) is connected to the ring element (29);
wherein the ring element (29) comprises a circumferentially closed outer wall with a groove (37);
wherein the ring element (29) is mounted to the valve insert housing (16) by a clear clip (36) penetrating partially into the groove (37) of the ring element (29) and partially into a groove (38) of the valve insert housing (16) surrounding the ring element (29).

10. Method for calibrating a flow regulation valve (10) for liquid conduction heating and cooling installations, **characterized by** comprising the following steps:
providing a flow regulation valve (10) as claimed in one of claims 1 to 9;
installing the flow regulation valve (10) in a liquid conduction heating and cooling installation or in a calibration installation, namely the valve inlet (12) to an inlet pipe and the valve outlet (13) to an outlet duct of the installation;
providing a flow through the flow regulation valve (10) under defined calibration conditions by opening the first valve body (18);
measuring the flow;
moving the first valve body (18) towards a closing position of the same thereby decreasing the flow through the flow regulation valve (10) until the flow through the flow regulation valve (10) reaches a specific flow rate;
marking the valve insert (15) when the first valve body (18) is in a position in which the same provides the specific flow rate.

11. Method as claimed in claim 10, **characterized in that** the first valve body (18) is moved towards the closing position of the same by turning a handle element (33) of the flow regulation valve (10), wherein the handle element (33) is received by the valve insert housing (16) in such a way that said handle element (33) comprises an outer thread (34) acting together within an inner thread (35) of the valve insert housing (16) so that the handle element (33) is rotatable relative to the valve insert housing (16).

12. Method as claimed in claim 11, **characterized in that** a mark (43) is provided on the valve insert (15) opposite a mark of a scale (41) of the handle element (33) being indicative to the specific flow rate.

13. Method as claimed in one of claims 10-12, **characterized in that** the marking is provided by punching the valve insert (15).

## Patentansprüche

1. Durchflussregelventil (10) für flüssigkeitsleitende Heiz- und Kühlinstallationen, Folgendes aufweisend:
ein Ventilgehäuse (11), das einen Ventileinlass (12), einen Ventilauslass (13) und einen Verbindungsstutzen (14), der zwischen dem Ventileinlass (12) und dem Ventilauslass (13) angeordnet ist, vorsieht, wobei der Verbindungsstutzen (14) ein Innengewinde (23) aufweist;
einen Ventileinsatz (15), der im Verbindungsstutzen (14) des Ventilgehäuses (11) aufgenommen ist, wobei der Ventileinsatz (15) Folgendes aufweist:
ein Ventileinsatzgehäuse (16), das ein Außengewinde (17) aufweist, das zusammen mit dem Innengewinde (23) des Verbindungsstutzens (14) wirkt;
einen ersten Ventilkörper (18), der von einer Ventilspindel (19) getragen wird, wobei der erste Ventilkörper (18) eine Absperrfunktion vorsieht, wenn das Ventil (10) geschlossen ist, und eine voreingestellte Durchflussfunktion, wenn das Ventil (10) geöffnet ist;
einen zweiten Ventilkörper (21), wobei der zweite Ventilkörper (21) eine druckunabhängige Durchflussregelungsfunktion vorsieht, wenn das Ventil (10) geöffnet ist, um den Durchfluss unabhängig von dem Druck vor dem ersten Ventilkörper (18) und/oder nach dem ersten Ventilkörper (18) konstant zu halten, wobei ein Abschnitt des Ventileinsatzgehäuses (16) konzentrisch um den zweiten Ventilkörper (21) angeordnet ist und die Bewegung des zweiten Ventilkörpers (21) führt, und wobei der zweite Ventilkörper (21) die Bewegung der Ventilspindel (19), die den ersten Ventilkörper (18) trägt, führt;
eine Membran (24), die mit dem zweiten Ventilkörper (21) und einer Durchflussregelungsfeder (27), die auf den zweiten Ventilkörper (21) wirkt, verbunden ist,
wobei eine durch die Durchflussregelungsfeder (27) vorgesehene Kraft und eine von dem Druck nach dem ersten Ventilkörper (18) abhängige Kraft dazu neigen, den zweiten Ventilkörper (21) in eine erste Richtung zu bewegen,
wobei eine von dem Druck vor dem ersten Ventilkörper (18) abhängige Kraft dazu neigt, den zweiten Ventilkörper (21) in eine zweite, entgegengesetzte Richtung zu bewegen;
einen ersten Ventilsitz (20) für den ersten Ventilkörper (18) und einen zweiten Ventilsitz (22) für den zweiten Ventilkörper (21), die durch das Ventilgehäuse (11) vorgesehen sind;
**gekennzeichnet durch**
eine getrennte Federstütze (44) für die Durchflussregelungsfeder (27),
wobei die Federstütze (44) am Ventileinsatzgehäuse (16) montiert ist,
wobei ein erstes Ende der Durchflussregelungsfeder (27) am zweiten Ventilkörper (21) abgestützt ist,
wobei ein entgegengesetztes zweites Ende der Durchflussregelungsfeder (27) an der Federstütze (44) abgestützt ist.

2. Durchflussregelungsventil nach Anspruch 1, **dadurch gekennzeichnet, dass** ein erster Abschnitt (44a) der Federstütze (44) an einem Endabschnitt (16e) des Ventileinsatzgehäuses (16) montiert ist.

3. Durchflussregelungsventil nach Anspruch 2, **dadurch gekennzeichnet, dass** der erste Abschnitt (44a) der Federstütze (44) über eine Einrastverbindung am Endabschnitt (16e) des Ventileinsatzgehäuses (16) montiert ist, und zwar so, dass der erste Endabschnitt (44a) der Federstütze (44) in eine Nut (42) eingerastet wird, die an einer Außenwand des Ventileinsatzgehäuses (16) vorgesehen ist.

4. Durchflussregelventil nach Anspruch 2 oder 3, **dadurch gekennzeichnet, dass** der zweite Abschnitt (44b) der Federstütze (44) axial und radial über den Endabschnitt (16e) des Ventileinsatzgehäuses (16) hinaus vorsteht, wobei das zweite Ende der Durchflussregelfeder (27) gegen den zweiten Abschnitt (44b) der Federstütze (44) gestützt ist.

5. Durchflussregelventil nach einem der Ansprüche 1-4, **dadurch gekennzeichnet, dass** der Druck vor dem ersten Ventilkörper (18) durch die Membran (24) auf den zweiten Ventilkörper (21) wirkt.

6. Durchflussregelventil nach Anspruch 5, **dadurch gekennzeichnet, dass** der Druck vor dem ersten Ventilkörper (18) durch einen Kanal (25) der Spindel (19) zu einer ersten Seite der Membran (24) geführt wird.

7. Durchflussregelventil nach einem der Ansprüche 1-6, **dadurch gekennzeichnet, dass** der Druck nach dem ersten Ventilkörper (18) zusammen mit der durch die Durchflussregelfeder (27) vorgesehenen Kraft direkt auf den zweiten Ventilkörper (21) wirkt.

8. Durchflussregelventil nach einem der Ansprüche 1-7, **dadurch gekennzeichnet, dass** der zweite Ventilsitz (22) für den zweiten Ventilkörper (21) konzentrisch um den ersten Ventilsitz (20) für den ersten Ventilkörper (18) positioniert ist, wobei das Ventilgehäuse (11) eine konzentrisch geformte Innenoberflächenkontur (28) aufweist, die den zweiten Ventilsitz (22) vorsieht und sich neben dem zweiten Ventilsitz (22) und dem ersten Ventilsitz (21) befindet.

9. Durchflussregelventil nach einem der Ansprüche 1-8, **dadurch gekennzeichnet, dass** der Ventileinsatz (15) ein Ringelement (29) aufweist,
wobei ein erster Abschnitt der Membran (24) mit dem zweiten Ventilkörper (21) verbunden ist und ein zweiter Abschnitt der Membran (24) mit dem Ringelement (29) verbunden ist;
wobei das Ringelement (29) eine umlaufend geschlossene Außenwand mit einer Nut (37) aufweist;
wobei das Ringelement (29) über einen Clear Clip (36), der zum Teil in die Nut (37) des Ringelements (29) und zum Teil in eine Nut (38) des das Ringelement (29) umgebenden Ventileinsatzgehäuses (16) vordringt, am Ventileinsatzgehäuse (16) montiert ist.

10. Verfahren zum Kalibrieren eines Durchflussregelventils (10) für flüssigkeitsleitende Heiz- und Kühlinstallationen, **dadurch gekennzeichnet, dass** das Verfahren die folgenden Schritte aufweist:
Vorsehen eines Durchflussregelventils (10) nach einem der Ansprüche 1 bis 9;
Installieren des Durchflussregelventils (10) in einer flüssigkeitsleitenden Heiz- und Kühlinstallation oder in einer Kalibrationsinstallation, nämlich den Ventileinsatz (12) an ein Einlassrohr und den Ventilauslass (13) an eine Auslassleitung der Installation;
Vorsehen eines Durchflusses durch das Durchflussregelventil (10) unter definierten Kalibrierungsbedingungen durch Öffnen des ersten Ventilkörpers (18);
Messen des Durchflusses;
Bewegen des ersten Ventilkörpers (18) in dessen Schließstellung und dadurch Verringern des Durchflusses durch das Durchflussregelventil (10), bis der Durchfluss durch das Durchflussregelventil (10) eine bestimmte Durchflussgeschwindigkeit erreicht;
Markieren des Ventileinsatzes (15), wenn sich der erste Ventilkörper (18) in einer Position befindet, in der er die bestimmte Durchflussgeschwindigkeit vorsieht.

11. Verfahren nach Anspruch 10, **dadurch gekennzeichnet, dass** der erste Ventilkörper (18) in dessen Schließposition bewegt wird, indem ein Griffelement (33) des Durchflussregelventils (10) gedreht wird, wobei das Griffelement (33) vom Ventileinsatzgehäuse (16) derart aufgenommen wird, dass das Griffelement (33) ein Außengewinde (34) aufweist, das innerhalb eines Innengewindes (35) des Ventileinsatzgehäuses (16) damit zusammenwirkt, sodass das Griffelement (33) in Bezug zum Ventileinsatzgehäuse (16) drehbar ist.

12. Verfahren nach Anspruch 11, **dadurch gekennzeichnet, dass** eine Markierung (43) einer Markierung einer Skala (41) des Griffelements (33), die die bestimmte Durchflussgeschwindigkeit anzeigt, entgegengesetzt auf dem Ventileinsatz (15) vorgesehen ist.

13. Verfahren nach einem der Ansprüche 10-12, **dadurch gekennzeichnet, dass** die Markierung durch das Stanzen des Ventileinsatzes (15) vorgesehen wird.

## Revendications

1. Soupape (10) de régulation de débit pour installations de chauffage et de refroidissement par transport de liquide, comprenant :
un boîtier (11) de soupape fournissant une entrée (12) de soupape, une sortie (13) de soupape et un orifice de liaison (14) agencé entre l'entrée (12) de soupape et la sortie (13) de soupape, l'orifice de liaison (14) comportant un filetage intérieur (23) ;
une pièce rapportée (15) de soupape logée à l'intérieur de l'orifice de liaison (14) du boîtier (11) de soupape, la pièce rapportée (15) de soupape comportant
un boîtier (16) de pièce de rapportée de soupape comportant un filetage extérieur (17) coopérant avec le filetage intérieur (23) de l'orifice de liaison (14) ;
un premier corps (18) de soupape porté par une queue (19) de soupape, ledit premier corps (18) de soupape assurant une fonction de sectionnement lorsque la soupape (10) est fermée et une fonction de préréglage de débit lorsque la soupape (10) est ouverte ;
un deuxième corps (21) de soupape, ledit deuxième corps (21) de soupape assurant une fonction de régulation de débit indépendamment de la pression lorsque la soupape (10) est ouverte afin de maintenir le débit constant indépendamment de la pression présente en amont du premier corps (18) de soupape et/ou en aval du premier corps (18) de soupape, une partie du boîtier (16) de pièce rapportée de soupape étant placée concentriquement autour du deuxième corps (21) de soupape et guidant le déplacement du deuxième corps (21) de soupape, et le deuxième corps (21) de soupape guidant le déplacement de la queue (19) de soupape portant le premier corps (18) de soupape ;
une membrane (24) reliée au deuxième corps (21) de soupape et un ressort (27) de régulation de débit agissant sur le deuxième corps (21) de soupape,
une force fournie par ledit ressort (27) de régulation de débit et une force dépendant de la pression présente en aval du premier corps (18) de soupape tendant quant à elle à déplacer le deuxième corps (21) de soupape dans une première direction,
une force dépendant de la pression présente en amont du premier corps (18) de soupape tendant à déplacer le deuxième corps (21) de soupape dans une deuxième direction opposée ;
un premier siège (20) de soupape pour le premier corps (18) de soupape et un deuxième siège (22) de soupape pour le deuxième corps (21) de soupape, tous deux fournis par le boîtier (11) de soupape ;
**caractérisée par**
un support (44) de ressort distinct pour le ressort (27) de régulation de débit,
le support (44) de ressort étant monté sur le boîtier (16) de pièce rapportée de soupape,
une première extrémité du ressort (27) de régulation de débit étant supportée contre le deuxième corps (21) de soupape,
une deuxième extrémité opposée du ressort (27) de régulation de débit étant supportée contre le support (44) de ressort.

2. Soupape de régulation de débit selon la revendication 1, **caractérisée en ce qu'**une première partie (44a) du support (44) de ressort est montée sur une partie extrémité (16e) du boîtier (16) de pièce rapportée de soupape.

3. Soupape de régulation de débit selon la revendication 2, **caractérisée en ce que** la première partie (44a) du support (44) de ressort est montée sur la partie extrémité (16e) du boîtier (16) de pièce rapportée de soupape par une liaison par enclenchement, à savoir de sorte que la première partie extrémité (44a) du support (44) de ressort s'enclenche dans une rainure (42) ménagée au niveau d'une paroi extérieure du boîtier (16) de pièce rapportée de soupape.

4. Soupape de régulation de débit selon la revendication 2 ou 3, **caractérisée en ce qu'**une deuxième partie (44b) du support (44) de ressort fait saillie axialement et radialement vers l'intérieur au-delà de la partie extrémité (16e) du boîtier (16) de pièce rapportée de soupape, la deuxième extrémité du ressort (27) de régulation de débit étant supportée contre la deuxième partie (44b) du support (44) de ressort.

5. Soupape de régulation de débit selon l'une quelconque des revendications 1 à 4, **caractérisée en ce que** la pression présente en amont du premier corps (18) de support agit sur le deuxième corps (21) de soupape par l'entremise de la membrane (24).

6. Soupape de régulation de débit selon la revendication 5, **caractérisée en ce que** la pression présente en amont du premier corps (18) de soupape est guidée au travers d'un canal (25) de la queue (19) jusqu'à un premier côté de la membrane (24).

7. Soupape de régulation de débit selon l'une des revendications 1 à 6, **caractérisée en ce que** la pression présente en aval du premier corps (18) de soupape agit conjointement avec la force fournie par le ressort (27) de régulation de débit directement sur le deuxième corps (21) de soupape.

8. Soupape de régulation de débit selon l'une des revendications 1 à 7, **caractérisée en ce que** le deuxième siège (22) de soupape pour le deuxième corps (21) de soupape est placé concentriquement autour du premier siège (20) de soupape pour le premier corps (18) de soupape, le boîtier (11) de soupape comportant un contour de surface intérieure de forme conique (28) fournissant le deuxième siège (22) de soupape et, à proximité du deuxième siège (22) de soupape, le premier siège (21) de soupape.

9. Soupape de régulation de débit selon l'une des revendications 1 à 8, **caractérisée en ce que** la pièce rapportée (15) de soupape comporte un élément bague (29),
une première portion de la membrane (24) étant reliée au deuxième corps (21) de soupape et une deuxième portion de la membrane (24) étant reliée à l'élément bague (29) ;
l'élément bague (29) comprenant une paroi extérieure circonférentiellement fermée pourvue d'une rainure (37) ;
l'élément bague (29) étant monté sur le boîtier (16) de pièce rapportée de soupape par un clip transparent (36) pénétrant partiellement dans la rainure (37) de l'élément bague (29) et partiellement dans une rainure (38) du boîtier (16) de pièce rapportée de soupape entourant l'élément bague (29).

10. Procédé d'étalonnage d'une soupape (10) de régulation de débit pour installations de chauffage et de refroidissement par transport de liquide, **caractérisé en ce qu'**il comprend les étapes suivantes :
fourniture d'une soupape (10) de régulation de débit selon l'une des revendications 1 à 9 ;
installation de la soupape (10) de régulation de débit dans une installation de chauffage et de refroidissement par transport de liquide ou dans une installation d'étalonnage, à savoir l'entrée de soupape (12) sur un tuyau d'entrée et la sortie (13) de soupape sur une gaine de sortie de l'installation ;
fourniture d'un débit à travers la soupape (10) de régulation de débit dans des conditions d'étalonnage définies par ouverture du premier corps (18) de soupape ;
mesure du débit ;
déplacement du premier corps (18) de soupape vers sa position de fermeture de manière à réduire le débit à travers la soupape (10) de régulation de débit jusqu'à ce que le débit à travers la soupape (10) de régulation de débit atteigne une valeur de débit spécifique ;
repérage de la pièce rapportée (15) de soupape lorsque le premier corps (18) de soupape occupe une position dans laquelle il fournit la valeur de débit spécifique.

11. Procédé selon la revendication 10, **caractérisé en ce que** le premier corps (18) de soupape est déplacé vers sa position de fermeture par rotation d'un élément manette (33) de la soupape (10) de régulation de débit, l'élément manette (33) étant reçu par le boîtier (16) de pièce rapportée de soupape de sorte que ledit élément manette (33) comprend un filetage extérieur (34) coopérant à l'intérieur d'un filetage intérieur (35) du boîtier (16) de pièce rapportée de soupape de sorte que l'élément manette (33) est rotatif par rapport au boîtier (16) de pièce rapportée de soupape.

12. Procédé selon la revendication 11, **caractérisé en ce qu'**un repère (43) est ménagé sur la pièce rapportée (15) de soupape en regard d'un repère d'une échelle (41) de la manette (33) indiquant la valeur de débit spécifique.

13. Procédé selon l'une des revendications 10 à 12, **caractérisé en ce que** le repérage est réalisé par poinçonnement de la pièce rapportée (15) de soupape.
